# EUROPÄISCHE PATENTANMELDUNG

(11) **EP 0 944 259 A2**
(43) Veröffentlichungstag der Anmeldung: **22.09.1999**
(21) Anmeldenummer: 99104240.9
(22) Anmeldetag: 03.03.1999
(51) Int. Cl.: H04N 7/18

(54) **Kamerabewegungssteuerung**

(30) Priorität: 16.03.1998 DE 19811286
(71) Anmelder: plettac AG, 58829 Plettenberg (DE)
(72) Erfinder: Fleissner, Horst, 90579 Langenzenn (DE)
(74) Vertreter: Pröll, Jürgen, Dipl.-Ing. (FH)

(57) **Zusammenfassung**

Die Erfindung betrifft eine Kamerasteuerung, insbesondere für Überwachungskameras, bestehend aus einer Steuereinheit und einer Überwachungskameraeinheit welche über eine Übertragungsstecke verbunden sind. Die Steuereinheit weist eine Anzeigeeinheit auf, auf welcher die Videosignale der Überwachungskameraeinheit dargestellt werden. Die Anzeigeeinheit ist in mehrere Bereiche unterteilt. Mittels Eingabeinheiten ist die Überwachungskameraeinheit über die Anzeigeeinheit zu steuern. Übertragen werden relative Positionsdaten.

## Beschreibung

Die Erfindung betrifft eine Kamerasteuerung, insbesondere zur Steuerung der Bewegung einer Überwachungskamera mit den im Oberbegriff angegebenen Merkmalen.

Problematisch bei modernen Überwachungsanlagen mit Kamerasystemen und manueller Bewegungssteuerung der Überwachungskameras ist, daß die modernen Kamerasysteme mit sehr hohen Einstellgeschwindigkeiten arbeiten, welche die Fähigkeiten von Benutzern dieser Überwachungskameras überfordern. Dome oder Schwenk-Neigeköpfe mit seriellen Schnittstellen erreichen immer höhere Geschwindigkeiten und dadurch kürzere Einstellzeiten bei der Positionssteuerung. Bei der manuellen Steuerung durch einen Benutzer können zumeist diese hohen Geschwindigkeiten der Überwachungskamera nicht genutzt werden, weil sie mit den vorhandenen manuellen Bedienmitteln nicht beherrschbar sind.

Zumeist sind Überwachungskameras in ein Überwachungsnetz einbezogen, welches hierarchisch aufgebaut ist. Es existieren verschiedene Unterzentralen welche untereinander und mit der Zentrale, der Alarmzentrale, Daten austauschen. Über die Zentrale und die Unterzentralen wird der gesamte Datenverkehr abgewickelt, auch die manuelle Steuerung, die Positionssteuerung und die Videosignalübertragung der Überwachungskameras. Unter Positionssteuerung ist zu verstehen, daß die Überwachungskamera an in der Überwachungskamera gespeicherten Positionen Verfahren wird. Insbesondere bei der manuellen Steuerung entsteht ein Zeitversatz bei der Übertragung der Steuerbefehle und durch die Reaktionszeit des Benutzers. Wird eine manuelle Steuerung einer Überwachungskamera vorgenommen, so erfolgt, wegen des beschriebenen Zeitversatzes, ein verspätetes Ausführen des Stopp-Befehls. Es entsteht ein sogenannter Überlauf der Überwachungskamerabewegung. Dieser Überlauf nimmt mit der Versögerungsdauer der Befehlsübertragung, der Reaktionszeit des Benutzers und der Positioniergeschwindigkeit der Überwachungskamera zu. Im weiteren ist zu beachten, daß in einem digitalen Übertragungssystem, welches zumeist bei Überwachungsnetzen eingesetzt wird, das Videosignal der Überwachungskamera ebenfalls einer Zeitverzögerung unterliegt. Dies bedeutet, daß die von der Überwachungskamera erfaßte Szene stets einen Zeitvorsprung vor der Anzeige der Szene auf dem Überwachungsmonitor hat. Bei einer manuellen Steuerung der Überwachungskamera entsteht hierdurch ein weiterer Überlauf, da die Überwachungskamera stets weiter bewegt ist, als dies auf dem Überwachungsmonitor des Benutzers angezeigt wird.

Aus US 4 720 805 ist bekannt, die Bewegung der Kamera durch die Bewegung der Hand, mittels eines Systems Tablett/Schreibstift oder eines Touch Screen wegeproportional und zeitgleich zu steuern. Nachteilig hierbei ist aber, daß die Bewegung, wie bei herkömmlicher manueller Steuerung mit Taten oder Joystick, nicht verzögerungsfrei erfolgt. Hierdurch kommt es zu einem Überlauf der Kamera. Große Geschwindigkeiten sind nicht handhabbar.

Aus Research Disclosure, Nr. 340, August 1992, Titel: 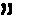 Moving a Video Camera directly from a Display", ist bekannt, eine Kamera über eine Fernsteuerung zu steuern. Hierbei wird mittels einer Fernbedienung auf einem Bildschirm ein Punkt ausgewählt, der durch ferngesteuerte Bewegung der Kamera anschließend in die Bildmitte gebracht wird. Die Wirkungsweise der Erfindung ist aus der Beschreibung jedoch nicht zu entnehmen.

Aus WO 94/08424 ist ein Verfahren und eine Vorrichtung zur Steuerung einer Kamera bekannt. Hierbei wird auf einem Computerbildschirm das von der Kamera erfaßte Bildsignal dargestellt. Über eine Zeigereinheit wird auf dem Bildschirm ein Bildpunkt ausgewählt, welchen die Kamera ansteuern soll. Der Computer berechnet anschließend die Absolutwerte zur Kamerasteuerung und steuert auf diese Weise die Kamera an. Diese wird auf die neue Position verfahren. Nachteilig hierbei ist, daß die Daten zur Steuerung der Kamera als Absolutwerte übertragen werden. Hier müssen die aktuellen Einstellungsdaten der Kamera und des Objektivs im Computer vorhanden sein, um die Absolutdaten zur Kamerasteuerung zu berechnen. Die aktuellen Einstellungsdaten der Kamera und des Objektivs müssen folglich stets vor der Absolutdatenberechnung abgefragt werden und bekannt sein.

Aufgabe der Erfindung ist es, eine Kamerasteuerung anzugeben, welche es ermöglicht, eine Überwachungskamera mit großer Zielgenauigkeit, auch bei Übertragungsverzögerungen, zu steuern. Im weiteren soll die Neupositionierung der Überwachungskamera mit kurzen Einstellzeiten erfolgen, die Positionssteuerung der Überwachungskamera soll leicht handhabbar sein und den Bediener entlasten. Es sollen zur Steuerung marktgängige, eingeführte Bedienelemente verwendet werden. Schließlich soll eine Kombination mit bekannten Bedienelementen möglich sein. Diese Aufgabe wird durch die Merkmale des Anspruchs 1 gelöst. Vorteilhafte Ausgestaltungen der Erfindung sind in den abhängigen Ansprüchen angegeben.

Die Kamerasteuerung besteht aus einer Steuereinheit, welche sich aus einer Recheneinheit, einer Anzeigeeinheit, einer Eingabeeinheit und einer Sende-Empfangseinheit zusammensetzt. Im weiteren ist eine Überwachungskameraeinheit in einem hierarchisch aufgebauten Überwachungsnetzwerk vorhanden.
Das Überwachungsnetzwerk besteht beispielsweise aus einem Netzwerk von Zentrale und Unterzentralen einer Alarmanlage, einem Telefonnetzwerk auf digitaler Basis oder einem Kommunikationsnetz. Das Kommunikationsnetz kann sowohl ein analoges, als auch ein digitales Netz: sein

Die Überwachungskameraeinheit besteht aus einer Überwachungskamera, einer Positionierungseinheit, welche die Positionssteuerung der Überwachungskamera vornimmt, einer Steuereinheit und einer Sende- und Empfangseinheit.

Die Überwachungskamera erfaßt die von ihr überwachte Szene. Die Videosignale der Überwachungskamera werden von der Steuereinheit der Überwachungskameraeinheit komprimiert und über die Sende- und Empfangseinheit der Überwachungskameraeinheit über das Überwachungsnetzwerk an die Steuereinheit der Kamerasteuerung übertragen. Die Steuereinheit der Kamerasteuerung empfängt das übertragenen Videosignal der Überwachungskamera und leitet es an die Recheneinheit weiter. Diese dekomprimiert das Videosignal und stellt es auf der Anzeigeeinheit dar. Im Bildmittelpunkt der Anzeigeeinheit ist eine Markierung angebracht, welche den Mittelpunkt des Anzeigebereiches der Anzeigeeinheit darstellt und zugleich die Mitte der von der Überwachungskameraeinheit aufgenommenen Szene bezeichnet. Im weiteren ist eine weitere Markierung auf der Anzeigeeinheit vorhanden. Diese Markierung ist einer der Eingabeeinheiten zugeordnet und wird mittels dieser Eingabeeinheit über den gesamten Anzeigebereich der Anzeigeeinheit bewegt. Die Markierung kann über den gesamten Anzeigebereich der Anzeigeeinheit verschoben werden. Über diese Markierung wählt ein Benuzter einen neuen Positionierpunkt der Überwachungskamera aus, indem er die Markierung an einen beliebigen Bildpunkt des Anzeigebereichs der Anzeigeeinheit verschiebt und durch Betätigung der Eingabeeinheit aktiviert. Die Recheneinheit errechnet anhand der auf der Anzeigeeinheit vorhandenen Bildinformationen den relativen Abstand zwischen den zwei Markierungen im Anzeigebereich der Anzeigeeinheit in horizontaler und vertikaler Richtung mit Bezug zur Breite und Höhe des Anzeigebereiches der Anzeigeeinheit und überträgt diese Relativdaten über die Sende- und Empfangseinheit an die Steuereinheit der Überwachungskamera. Die Daten werden vor der Übertragung von der Recheneinheit der Steuereinheit der Kamerasteuerung komprimiert. Die Steuereinheit der Überwachungskamera dekomprimiert und analysiert die übertragenen Relativdaten und rechnet diese in Absolutwerte zur Steuerung der Positionierungseinheit der Überwachungskamera um. Dies erfolgt anhand der aktuellen Einstellungen der Positionierungseinheit der Überwachungskamera, insbesondere unter Berücksichtigung des Objektiv-Öffnungswinkels. Anschließend steuert die Steuereinheit der Überwachungskamera die Positionierungseinheit mit den errechneten Absolutwerten an. Die Überwachungskamera wird mit maximaler Geschwindigkeit auf die neue Position ausgerichtet. Es erfolgt eine Auftrennung des Regelkreises Benutzer und Überwachungskamera. Ein direkter Einfluß auf den Bewegungsablauf bei der Positionierung der Überwachungskamera durch den Benutzer entfällt. Ein Überlauf wird vermieden.

Im weiteren wird die Erfindung anhand eines Ausführungsbeispiels mit FIG. 1 bis 4 beschrieben. Bei der nachfolgenden Beschreibung handelt es sich um eine beispielhafte Realisierung der Erfindung. Die Beschreibung hat rein beispielhaften Charakter.

Es zeigt:
- FIG. 1: eine schematische Darstellung eines Funkalarmnetzes mit Unterzentralen,
- FIG. 2: einen schematischen Aufbau einer Steuereinheit;
- FIG. 3: eine schematische Darstellung der Aufteilung der Bildoberfläche einer Anzeigeeinheit und
- FIG. 4: einen schematischen Aufbau einer Überwachungskameraeinheit.

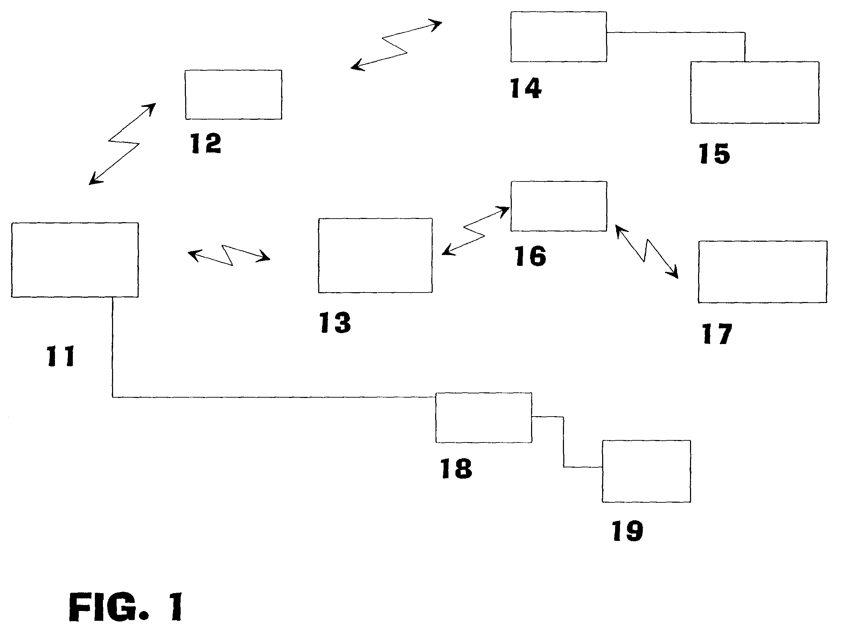

Bei der beispielhaften Ausführungsform gemäß FIG. 1 handelt es sich um einen Überwachungsnetzwerk, welches aus einer Zentrale 13, mehreren Unterzentralen 12, 14, 16, 18, einer Steuereinheit 11 und den Überwachungskameraeinheiten 15, 17 und 19 besteht.

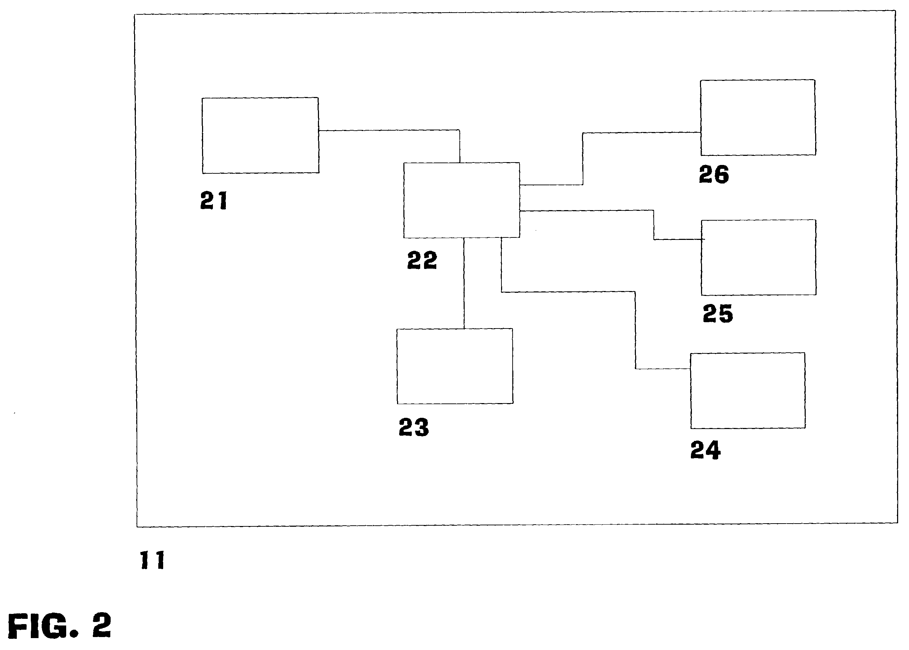

Die in FIG. 2 näher dargestellte Steuereinheit 11 besteht aus einer Anzeigeeinheit 21, einer Recheneinheit 22, Eingabeeinheiten 23, 24, 25 und einer Sende- und Empfangseinheit 26.

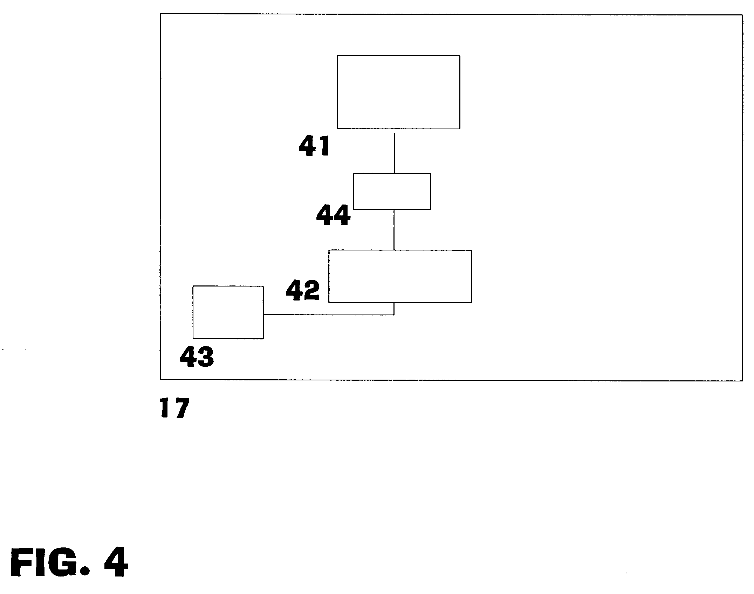

Die in FIG. 4 näher dargestellte Überwachungskameraeinheit 17 besteht aus einer Kameraeinheit 41, einer Positionierungseinheit 44, einer Steuereinheit 42 und einer Sende- und Empfangseinheit 43.

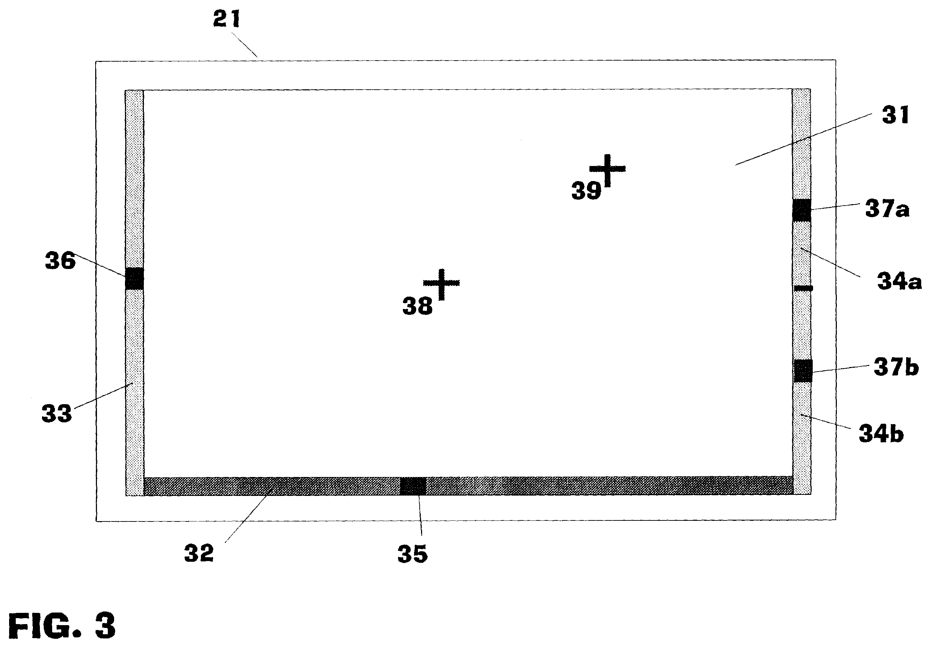

Die in FIG. 3 näher dargestellte Anzeigeeinheit 21 ist in mehrere Bereiche aufgeteilt. Die Recheneinheit 22 steuert die Anzeigeeinheit 21 und definiert auf der Anzeigeeinheit 21 einen Anzeigebereich 31. In diesem Anzeigebereich 31 zeigt die Recheneinheit 22 das Videosignal jeweils einer der Überwachungskameraeinheiten 15, 17 oder 19 an. Über jede einzelne Bedieneinheit 23, 24, 25 kann jede vorhandenen Überwachungskameraeinheiten 15, 17, 19 ausgewählt und deren aktuelles Videosignal angezeigt werden. Die Bedeineinheiten 23, 24, 25 sind redundant. Im weiteren sind Bereiche 32, 33, 34a, 34b in Form von Bildlaufleisten am Rande des Anzeigebereiches 31 angeordnet. In der weiteren Beschreibung ist die Überwachungskameraeinheit 17 ausgewählt und deren Videosignal wird im Anzeigebereich 31 der Anzeigeeinheit 21 der Steuereinheit 11 von der Recheneinheit 22 der Steuereinheit 11 dargestellt.

Die Bildlaufleiste 32 ist am unteren Rand des Anzeigebereiches 31 der Anzeigeeinheit 21 der Steuereinheit 11 angeordnet und stellt die horizontale Einstellmöglichkeit der Positionierungseinheit 44 der Überwachungskameraeinheit 17 dar. Die Bildlaufleiste 33 ist am linken Rand des Anzeigebereichs 31 der Anzeigeeinheit 21 der Steuereinheit 11 angeordnet und stellt die vertikale Einstellmöglichkeit der Positionierungseinheit 44 der Überwachungskameraeinheit 17 dar. Die Bildlaufleiste 34a ist am rechten Rand des Anzeigebereiches 31 der Anzeigeeinheit 21 der Steuereinheit 11 angeordnet und realisiert in visueller Weise die Zoommöglichkeit der Überwachungskameraeinheit 17. Die Bildlaufleiste 34b ist ebenfalls am rechten Rand des Anzeigebereiches 31 der Anzeigeeinheit 21 der Steuereinheit 11 angeordnet und realisiert in visueller Weise die Fokusiermöglichkeit der Überwachungskameraeinheit 17. Auf den Bildlaufleisten 32, 33, 34a, 34b sind Markierungen 35, 36, 37a, 37b angeordnet. Im weiteren sind Markierungen 38 und 39 im Anzeigebereich 31 der Anzeigeeinheit 21 der Steuereinheit 11 vorhanden.

In einer vorteilhaften Ausgestaltung der Erfindung ist vorgesehen, daß im Anzeigebereich 31 der Anzeigeeinheit 21 die Recheneinheit 22 zeitgleich mehrere Videosignale von Überwachungskameraeinheiten anzeigt.

Die Kameraeinheit 41 der Überwachungskameraeinheit 17 erfaßt einen Teilbereich des zu überwachenden Sichtfeldes. Die Steuereinheit 42 der Überwachungskameraeinheit 17 komprimiert das Videosignal der Kameraeinheit 41 der Überwachungskameraeinheit 17 und die Sende- und Empfangseinheit 43 der Überwachungskameraeinheit 17 übermittelt dieses an die Unterzentrale 16. Diese übermittelt das komprimierte Videosignal an die Zentrale 13, welche das komprimierte Videosignal weiter an die Steuereinheit 11 übermittelt. In der Steuereinheit 11 empfängt die Sende- und Empfangseinheit 26 das komprimierte Videosignal und leitet es an die Recheneinheit 22 weiter. Die Recheneinheit 22 entkomprimiert das Videosignal und stellt das Videosignal auf der Anzeigeinheit 21 im Anzeigebereich 31 dar.

Zur Visuallisierung der aktuellen Einstellungen der Überwachungskameraeinheit 17 überträgt die Steuereinheit 42 der Überwachungskameraeinheit 17 nach jeder Veränderung der Einstellung der Positionierungseinheit 44 der Überwachungskameraeinheit 17 und/oder des Zoomes und/oder des Fokuses der Kameraeinheit 41 der Überwachungskameraeinheit 17 die aktuellen Einstellungsdaten an die Steuereinheit 11. Die Recheneinheit 22 wertet diese Daten aus und stellt die aktuellen Einstellungen der Überwachungskameraeinheit 17 über die Bildlaufleisten 32, 33, 34a, 34b und die Markierungen 35, 36, 37a, 37b in für den Benutzer leicht erkennbarer Form dar.

Die Bildlaufleiste 32 mit der auf ihr befindlichen Markierung 35 stellt den, innerhalb eines gesamten Positionierbereichs definierbaren aktuellen Positionierbereich der Überwachungskameraeinheit 17 in horizontaler Richtung dar, unabhängig davon, wie groß der zugehörige Winkel tatsächlich ist. Die Markierung 35 zeigt den aktuellen Positionierort der Überwachungskameraeinheit 17 in horizontaler Richtung an. Die Bildlaufleiste 33 mit der auf ihr befindlichen Markierung 36 stellt den, innerhalb eines gesamten Positionierbereichs definierbaren Positionierbereich der Überwachungskameraeinheit 17 in vertikaler Richtung dar, unabhängig davon, wie groß der zugehörige Winkel tatsächlich ist. Die Markierung 36 zeigt den aktuellen Positionierort der Überwachungskameraeinheit 17 in vertikaler Richtung an. Die Bildlaufleiste 34a mit der auf ihr befindlichen Markierung 37a stellt den gesamten Verstellbereich der Zoomeinstellung der Überwachungskameraeinheit 17 dar, unabhängig davon, wie groß dieser tatsächlich ist. Die Markierung 37a zeigt die aktuelle Einstellung des Zooms der Überwachungskameraeinheit 17.
Die Bildlaufleiste 34b mit der auf ihr befindlichen Markierung 37b stellt den gesamten Verstellbereich der Fokusierung der Überwachungskameraeinheit 17 dar, unabhängig davon, wie groß dieser tatsächlich ist. Die Markierung 37b zeigt die aktuelle Einstellung des Fokus der Überwachungskameraeinheit 17.
Im weiteren stellt die Recheneinheit 22 die Markierung 38 im Zentrum des Anzeigebereiches 31 dar. Diese visualisiert den aktuellen Mittelpunkt der von der Überwachungskameraeinheit 17 erfaßten aktuellen Szene. Außerdem stellt die Recheneinheit 22 die Markierung 39 im Anzeigebereich 31 der Anzeigeeinheit 21 dar. Die Markierung 39 wird mittels einer der Eingabeeinheiten 23, 24, 25 oder mehrerer der Eingabeeinheiten 23, 24, 25 gesteuert und kann über den gesamten Anzeigebereich 31 frei verschoben werden.

Der Benutzer der Steuereinheit 11 erhält die von der Überwachungskameraeinheit 17 aktuell erfaßte Szene im Anzeigebereich 31 dargestellt. Soll die Ausrichtung der Überwachungskameraeinheit 17 verändert werden, so steuert der Bediener über die Eingabeeinheiten 23, 24, 25 die Markierung 39 an diejenige Stelle des Anzeigeberiches 31 der Anzeigeeinheit 21, welche die neue Szenenmitte sein soll. Ist diese Auswahl erfolgt, so fixiert er über eine der Eingabeeinheiten 23, 24, 25 die Markierung 39 und die Steuereinheit 11 leutet das Positionieren der Überwachungskameraeinheit 17 auf den neu ausgewählten Szenenmittelpunkt ein. Dies erfolgt in der Weise, daß die Recheneinheit 22 der Steuereinheit 11 den Abstand zwischen den Markierungen 39 und 38 in horizontaler und vertikaler Richtung im Anzeigebereich 31 erfaßt und berechnet. Die Recheneinheit 22 erfaßt die, den Markierung 38 und 39 zugeordneten Ortswerte im Anzeigebereich 31 und berechnet den relativen Abstand beider Markierungen zueinander. Die Berechnung erfolgt im Verhältnis zur Bildbreite und der Bildhöhe des Anzeigebereiche 31 der Anzeigeeinheit 21.
Die Recheneinheit 22 der Steuereinheit 11 komprimiert die ermittelten Abstandsdaten und überträgt die Abstandsdaten an die Sende- und Empfangseinheit 26 der Steuereinheit 11. Die Sende- und Empfangseinheit 26 überträgt die Daten an die Zentrale 13, diese an die Unterzentrale 16 und diese leitet die komprimierten Daten an die Überwachungskameraeinheit 17 weiter. In der Überwachungskameraeinheit 17 werden diese Daten von der Sende- und Empfangseinheit 43 empfangen, an die Steuereinheit 42 der Überwachungskameraeinheit 17 weitergeleitet und entkomprimiert. Die Steuereinheit 42 der Überwachungskameraeinheit 17 errechnet aus diesen Daten und den aktuellen Einstellungen der Kameraeinheit 41 der Überwachungskameraeinheit 17, insbesondere des Öffnungswinkels des Objektivs, und der Positionierungseinheit 44 der Überwachungskameraeinheit 17 die Absolutwerte zur Positionssteuerung. Die Steuereinheit 42 der Überwachungskameraeinheit 17 steuert nunmehr die Positionierungseinheit 44 mit den Absolutdaten an. Die Positonierungseinheit 44 verfährt nun die Kameraeinheit 41 mit maximaler Geschwindigkeit in die neue Position.

Zugleich werden weiterhin die Videosignale der Kameraeinheit 41, in oben beschriebener Weise, an die Steuereinheit 11 übertragen und dort auf der Anzeigeeinheit 21 im Anzeigebereich 31 dargestellt. Zugleich mit dem Verfahren der Überwachungskameraeinheit 17 errechnet die Recheneinheit 22 der Steuereinheit 11 die neuen Positionierungen der Markierungen 36 und 35 auf den Laufleisten 33 und 32, bezogen auf die neue Position der Überwachungskameraeinheit 17.

Mittels einer der Eingabeeinheiten 23, 24, 25 kann der Benutzer die Positionierung der Markierungen 35, 36 auf den zugeordneten Bildllaufleisten 32, 33 verschieben und damit die Überwachungskameraeinheit 17 in einem größeren Bereich als den Anzeigebereich 31 ausrichten. Wird beispielsweise die Markierung 36 auf der Bildlaufleiste 33 ganz nach oben verschoben, so wertet dies die Recheneinheit 22 aus und überträgt an die Überwachungskameraeinheit 17 den Befehl, daß die Steuereinheit 42 die Positionierungseinheit 44 mit der Kameraeinheit 41 auf die maximale vertikale Position noch oben ausrichtet.

Um den Bildausschnitt 31, das heißt den Zoom der Kameraeinheit 41 zu verändern, wird die Markierung 37a auf der Bildlaufleiste 34a verschoben. Über die Eingabeeinheiten 23, 24, 25 wird die Markierung 37a angewählt und verschoben. Auf diese Weise wird der Zoomfaktor der Kamera erhöht oder verringert. Der Bildausschnitt verringert sich oder vergrößert sich entsprechend. Die Recheneinheit 22 erfaßt die Veränderung der Position der Markierung 37a auf der Bildlaufleiste 34a zur vorherigen Position und ermittelt hieraus eine Relativveränderung der Markierung zur vorherigen Position. Diese Daten über die relative Veränderung übermittelt die Recheneinheit 22 über die Sende- und Empfangseinheit 26 der Steuereinheit 11, über die Zentrale 13 und die Unterzentrale 16 an die Überwachungskameraeinheit 17. Die Sende- und Empfangseinheit 43 der Überwachungskameraeinheit 17 empfängt diese Daten und leitet diese an die Steuereinheit 42 der Überwachungskamerainheit 17 weiter. Die Steuereinheit 42 errechnet aus den Relativdaten die Absolutdaten zur Veränderung des Zooms der Kameraeinheit 41 und stellt den Zoom der Kameraeinheit 41 auf den neuen Wert ein.

Muß die Bildschärfe nachgestellt werden, so erfolgt dies über die Bildlaufleiste 34b und die Markierung 37b. Die Markierung 37b wird auf der Bildlaufleiste 34b mittels einer der Eingabeeinheiten 23, 24, 25 angewählt und verändert. Der übrige Ablauf entspricht dem bei der Zoomeinstellung beschriebenen Ablauf.

Auf diese Weise wird der Regelkreis zwischen dem Benutzer und der Positionierungseinheit 44 der Überwachungskameraeinheit 17 aufgetrennt. Der Benutzer muß nicht mehr selbst die Bewegung der Kameraeinheit 41 der Überwachungskameraeinheit 17 über die Positionierungseinheit 44 der Überwachungskameraeinheit 17 bis zum Stillstand aktiv steuern und nachregeln. Der Soll-Ist-Wert-Vergleich wird nicht mehr vom Benutzer getätigt, sondern die Steuereinheit 11 bzw. Überwachungskameraeinheit 17 führt dieses selbständig und nur am Ausführungsort durch. Der Benutzer muß lediglich über die Markierung 39 oder die Markierungen 35, 36, 37a oder 37b der Bildlaufleisten 32, 33, 34a oder 34b neue Ausrichtungspunkte der Überwachungskameraeinheit 17 festlegen. Die Bewegung der Kameraeinheit 41 erfolgt mit maximaler Geschwindigkeit der Positioniereinheit 44. Ein Überlauf wird vermieden.

Die Umrechnung der von der Recheneinheit 22 der Steuereinheit 11 errechneten Relativdaten erfolgt in der Steuereinheit 42 der Überwachungskameraeineheit 17 wie folgt:
Die Relativdaten werden als Verhältnis der aktuellen Bildbreite und Bildhöhe des Anzeigebereiches 31 der Anzeigeeinheit 21 zur Position der Markierung 39 gegenüber der Markierung 38 auf dem Anzeigebereich 31 der Anzeigeeinheit 21 errechnet. Die Breite des gesamten Anzeigebereiches 31 wird als 1 definiert, ebenso die Höhe. Wird die Markierung 39 verändert, so kann die neue Position der Markierung 39 auf dem Anzeigebereich 31 der Anzeigeeinheit 21 der Steuereinheit 11 im Verhältnis zur Bildbreite und Bildhöhe des Anzeigebereiches 31 und der Markierung 38 angegebene werden und jeweils in einem Wertebereich von -0,5 bis +0,5 liegen. Wird die Markierung 39 beispielsweise von der Markierung 38 ausgehend auf dem Anzeigebereich 31 derart nach links oben auf einen Punkt des Anzeigebereiches 31 verschoben, daß das Verhältnis zur Bildbreite mit -0,2 und das Verhältnis zur Bildhöhe mit +0,3 von der Recheneinheit 22 bestimmt wird, so werden diese Werte, nämlich -0,2 für die Bildbreite und +0,3 für die Bildhöhe als Relativwerte an die Überwachungskameraeinheit 17 übertragen. Die Steuereinheit 42 der Überwachungskameraeinheit 17 errechnet aus diesen Relativdaten und den Einstellungen der Überwachungskameraeinheit 17, insbeondere des Öffnungswinkels des Objektivs, die neuen Positionswerte, auf welche die Positionierungseinheit 44 der Überwachungskameraeinheit 17 angesteuert werden muß, um die neue Position einzunehmen. Dieser Ablauf gilt prinzipiell auch für Zoom und Fokus.

In einer vorteilhaften Ausgestaltungsmöglichkeit ist die Laufleiste 32 in Form eines Ringes oder Kreisbogens realisiert. Auf diesem Ring zeigt die Steuereinheit 22 die Markierung 35 an; die Markierung 35 ist nur auf dem Ring verschiebbar. Hierdurch ist der visuelle Bezug dazu hergestellt, daß sich die Kamera in horizontaler Richtung auf einer Kreisbahn bewegt, da die Positioniereinheit 44 der Überwachungskameraeinheit 17 in horizontaler Ebene eine Kreisbewegung ausführt und die Kameraeinheit 41 der Überwachungskameraeinheit 17 gedreht und nicht linear verschoben wird.

In einer weiteren Ausgestaltungsmöglichkeit ist auf der Bildlaufleiste 33 und der Bildlaufleiste 32 ein Raster aufgebracht, welches die Absolutwerte der Steuerung in Grad-Neigungs-Winkel anzeigt. Hierdurch ist dem Benutzer sofort deutlich, an welchem Punkt sich die Kamera befindet.

In einer weiteren vorteilhaften Ausgestaltungsform der Erfindung ist die Steuereinheit 11 durch einen handelsüblichen PC ersetzt. Die Anzeigeeinheit 21 wird von einem Bildschirmmonitor gebildet, die Recheneinheit 22 ist die CPU mit Speicher, die Sende- und Empfangseinheit 26 wird durch eine Datenschnittstelle realisiert und die Eingabeeinheit 23 durch eine Maus, die Eingabeeinheit 24 durch einen Joystick und die Eingabeeinheit 25 durch eine handelsübliche Tastatur. Es ist auch denkbar, die Anzeigeeinheit 21 als berührungssensitiven Bildschirm darzustellen, wodurch die Eingabeeinheiten 23 bis 25 komplett entfallen können, da diese dann in der Anzeigeeinheit 21 direkt integriert sind.
In einer modifizierten Ausgestaltung der Erfindung kann die Kamerasteuerung auch zur automatischen Täterverfolgung eingesetzt werden Hierzu weist der Benutzer der Markierung 39 im Anzeigebereich 31 ein vorhandenes Objekt, beispeilsweise eine Person, zu. Die Recheneinheit 22 analysiert das Objekt, insbesondere die angezeigte Form des Objektes und weist diesem, jeweils auf das zugewiesene Objekt zentriert, die Markierung 39 zu. Bewegt sich das Objekt, so wird dies von der Recheneinheit 22 ermittelt. Die Recheneinheit 22 bewegt die Markierung 39 entsprechend der Bewegung des markierten Objekts. Im Fall einer Bewegung der Markierung 39 errechnet die Recheneinheit 22 sofort die relative Veränderung des Abstandes der Markierung 39 von der Markierung 38 und überträgt diese Daten in oben beschriebener Weise an die Überwachungskameraeinheit 17. Die Überwachungskameraeinheit führt mittels der Steuereinheit 42 und der Positionierungseinheit 44 die Kameraeinheit 41 dem Objekt nach. Auf diese Weise wird das Objekt stetig verfolgt, so lange es im Bereich der Überwachungskameraeinheit (sichtbarer Bereich) ist. Entfernt sich das Objekt von der Überwachungskameraeinheit 17 und wird es auf dem Anzeigebereich 31 kleiner, so erkennt die Recheneinheit 22 die relative Verkleinerung des Objektes und übersendet diese Relativdaten an die Überwachungskameraeinheit 17. Diese regelt nun den Zoom und den Fokus anhand der aktuellen Einstellungen der Kameraeinheit 41 und den Relativdaten nach, sodaß das Objekt auf dem Anzeigebereich 31 in unveränderter Größe und Schärfe angezeigt wird.

In einer weiteren vorteilhaften Ausgestaltung der Erfindung ist der Benutzer in der Lage die von der Überwachungskameraeinheit 17 erfaßte und auf dem Anzeigebereich 31 dargestellte Szene mittels einer der Eingabeeinheiten 23, 24, 25 zu zoomen. Auf dem Anzeigebereich 31 definiert der Benutzer mittel einer der Eingabeeinheiten 23, 24, 25 einen rechteckigen Bereich. Sobald dieser Bereich definiert ist, errechnet die Recheneinheit 22 den neuen Anzeigebereich 31 und zommt diesen heran, indem sie der Überwachungskameraeinheit 17 die neuen Relativdaten übermittelt. Die Steuereinheit 42 der Überwachungskameraeinheit 17 steuert die Kameraeinheit 41 mit den absoluten Einstelldaten, errechnet aus den übertragenen Relativdaten und den aktuellen Einstellungen der Überwachungskameraeinheit 17. Der ausgewählte Ausschnitt wird gezoomt und im Anzeigebereich 31 der Anzeigeeinheit 21 dargestellt.

In einer weiteren vorteilhaften Ausgestaltung der Erfindung ist die Überwachungskameraeinheit 15 leitungsgebunden mit der Unterzentrale 14 verbunden. Die Unterzentrale 14 ist hingegen über eine Funkstrecke mit der Zentralen 13 verbunden. Die Überwachungskameraeinheit 19 ist mit der Unterzentralen 18 über eine Leitung verbunden und die Unterzentrale 18 ist direkt mit der Steuereinheit 11 verbunden. Es ist aber auch denkbar eine Überwachungskameraeinheit direkt mit der Steuereinheit 11 zu verbinden. Hierdurch wird die Zeitverzögerung bei der Übertragung der Videosignale der Überwachungskameraeinheit und bei der Übertragung der Steuerdaten verkürzt. Eine Echtzeitsteuerung ist hierdurch leichter möglich.

In einer weiteren vorteilhaften Ausgestaltung der Erfindung ist die Positionierungseinheit 44 der Überwachungskameraeinheit 17 durch einen Schwenkneigekopf oder einen sogenannten Dom realisiert. Der Schwenkneigekopf und der Dom weisen eine serielle Schnittstelle zur Datenübertragung auf.

In einer weiteren vorteilhaften Ausgestaltung der Erfindung ist die Überwachungskameraeinheit 17 mit einen Autofokus ausgestattet. Der Fokus wird automatisch der aktuell von der Überwachungskameraeinheit 17 erfaßten Szene angepaßt.

In einer weiteren vorteilhaften Ausgestaltung der Erfindung werden die Bildlaufleisten 34a, 34b automatisch ausgeblendet, wenn über eine längere Zeitdauer hinweg keine Veränderungen am Fokus oder am Zoom der Überwachungskameraeinheit 17 vorgenommen worden sind.

In einer weiteren vorteilhaften Ausgestaltung der Erfindung ist vorgesehen, daß alle Markierungen und alle Bildlaufleisten von der Recheneinheit 22 auf dem Anzeigebereich 31 der Anzeigeeinheit 21 ausgeblendet werden, wenn über eine vordefinierte Zeitspanne hinweg keine der Eingabeeinheiten 23, 24, 25 bedient wurde.

## Patentansprüche

1. Kamerasteuerung, insbesondere für Überwachungskameras, mit einer Steuereinheit (11), bestehend aus einer Recheneinheit (22), einer Anzeigeeinheit (21), Eingabeeinheiten (23, 24, 25) und einer Sende- und Empfangseinheit (26), wobei die Steuereinheit (11) mit einer Überwachungskameraeinheit (17), welche aus einer Sende- und Empfangseinheit (43), einer Steuereinheit (42), einer Positioniereinheit (44) und einer Kameraeinheit (41) besteht, über eine Übertragungsstecke verbunden ist,
die Sende- und Empfangseinheit (43) der Überwachungskameraeinheit (17) das Videosignal der Kameraeinheit (41) der Überwachungskameraeinheit (17) über die Übertragungsstrecke zur Sende- und Empfangseinheit (26) der Steuereinheit (11) überträgt,
die Recheneinheit (22) der Steuereinheit (11) das Videosignal auf der Anzeigeeinheit (21) der Steuereinheit (11) dargestellt,
**dadurch gekennzeichnet,**
daß die Steuereinheit (11) anhand von Benutzereingaben über die Anzeigeeinheit (21) der Steuereinheit (11) relavie Positionsdaten zur Steuerung der Überwachungskameraeinheit (17) errechnet,
daß die Steuereinheit (11) diese relativen Positionsdaten an die Überwachungskameraeinheit (17) überträgt und diese die relativen Positionsdaten in Absolutdaten zur Positionssteuerung umrechnet und die Positionssteuerung durchführt.

2. Kamerasteuerung nach Anspruch 1,
**dadurch gekennzeichnet,**
daß die Recheneinheit (22) der Steuereinheit (11) die Anzeigeeinheit (21) der Steuereinheit (11) in Bereiche aufteilt,
daß die Recheneinheit (22) der Steuereinheit (11) einen Anzeigebereich (31) auf der Anzeigeeinheit (21) der Steuereinheit (11) definiert, in welchem die Recheneinheit (22) der Steuereinheit (11) das Videosignal der Kameraeinheit (41) der Überwachungskameraeinheit (17) dargestellt,
daß die Recheneinheit (22) der Steuereinheit (11) eine Markierung (38) im Anzeigebereich (31) der Anzeigeeinheit (21) der Steuereinheit (11) dargestellt, welche die Mitte der aktuellen Szenenaufnahme der Überwachungskameraeinheit (17) darstellt,
daß die Recheneinheit (22) der Steuereinheit (11) eine weitere Markierung (39) im Anzeigebereich (31) der Anzeigeeinheit (21) der Steuereinheit (11) anzeigt,
daß die Markierung (39) mittels jeweils einer der Eingabeeinheiten (23, 24, 25) über den Anzeigebereich (31) der Anzeigeeinheit (21) der Steuereinheit (11) verschiebbar ist,
daß die Markierung (39) den neuen Ausrichtungspunkt der Überwachungskameraeinheit 17 darstellt,
daß durch Aktivierung der Markierung (39) über eine der Eingabeeinheiten (23, 24, 25) die Recheneinheit (22) der Steuereinheit (11) den Abstand in horizontaler und vertikaler Richtung zwischen den Markierungen (38) und (39) auf dem Anzeigebereich (31) der Anzeigeeinheit (21) der Steuereinheit (11) errechnet,
daß die Recheneinheit (22) der Steuereinheit (11) diese relativen Abstandsdaten an die Sende- und Empfangseinheit (26) der Steuereinheit (11) leitet und die Sende- und Empfangseinheit (26) der Steuereinheit (11) die relativen Abstandsdaten an die Überwachungskameraeinheit (17) überträgt,
daß die Sende- und Empfangseinheit (43) der Überwachungskameraeinheit (17) die relativen Abstandsdaten empfängt und an die Steuereinheit (42) der Überwachungskameraeinheit (17) weiterleitet
daß die Steuereinheit (42) der Überwachungskameraeinheit (17) aus den relativen Abstandsdaten die Absolutdaten zur Steuerung der Positionierungseinheit (44) der Überwachungskameraeinheit (17), anhand der aktuellen Einstellungen der Kameraeinheit (41) der Überwachungskameraeinheit (17), insbesondere des Öffnungswinkels des Objektivs, und der Positionierungseinheit (44) der Überwachungskameraeinheit (17) errechnet und
daß die Steuereinheit (42) der Überwachungskameraeinheit (17) die Positionierungseinheit (44) der Überwachungskameraeinheit (17) mit den Absolutdaten ansteuert und die Kameraeinheit (41) der Überwachungskameraeinheit (17) auf die neue Position einstellt.

3. Kamerasteuerung nach Anspruch 2,
**dadurch gekennzeichnet,**
daß die Recheneinheit (22) der Steuereinheit (11) auf der Anzeigeeinheit (21) der Steuereinheit (11) Bereiche (32, 33, 34a, 34b) anzeigt,
daß die Recheneinheit (22) der Steuereinheit (11) diesen Bereichen Einstelldaten der Überwachungskameraeinheit (17) zuordnet und diese Einstelldaten visuell darstellt.

4. Kamerasteuerung nach Anspruch 3,
**dadurch gekennzeichnet,**
daß die Recheneinheit (22) der Steuereinheit (11) auf der Anzeigeeinheit (21) der Steuereinheit (11) dem Bereich (32) den horizontalen Einstellungsbereich der Überwachungskameraeinheit (17) zuordnet,
daß die Recheneinheit (22) der Steuereinheit (11) auf der Anzeigeeinheit (21) der Steuereinheit (11) dem Bereich (33) den vertikalen Einstellungsbereich der Überwachungskameraeinheit (17) zuordnet,
daß die Recheneinheit (22) auf der Anzeigeeinheit (21) der Steuereinheit (11) dem Bereich (34a) den Zoombereich der Überwachungskameraeinheit (17) zuordnet und
daß die Recheneinheit (22) auf der Anzeigeeinheit (21) der Steuereinheit (11) dem Bereich (34b) die Einstellung des Fokus der Überwachungskameraeinheit (17) zuordnet.

5. Kamerasteuerung nach Anspruch 3 oder 4,
**dadurch gekennzeichnet,**
daß die Recheneinheit (22) der Steuereinheit (11) auf den Bereichen (32, 33, 34a, 34b) der Anzeigeeinheit (21) der Steuereinheit (11) jeweils eine Markierung (35, 36, 37a, 37b) darstellt und daß die Recheneinheit (22) die Markierungen (35, 36, 37a, 37b) in den Bereichen (32, 33, 34a, 34b) der Anzeigeeinheit (21) der Steuereinheit (11) derart positioniert, daß diese die aktuellen relativen Positionen der Überwachungskameraeinheit (17) bzw. die aktuellen Einstellungen der Überwachungskameraeinheit (17), bezogen auf die Endstellungen der Überwachungskameraeinheit (17) visuallisieren.

6. Kamerasteuerung nach einem der Ansprüche 2 bis 5,
**dadurch gekennzeichnet**,
daß die Recheneinheit (22) der Steuereinheit (11) die Bereiche (32, 33, 34a, 34b) der Anzeigeeinheit (21) der Steuereinheit (11) in Form von Bildlaufleisten darstellt.

7. Kamerasteuerung nach einem der Ansprüche 2 bis 6,
**dadurch gekennzeichnet,**
daß die Steuereinheit (42) der Überwachungskameraeinheit (17) die Videosignale der Kameraeinheit (41) der Überwachungskameraeinheit (17) komprimiert und die Sende- und Empfangseinheit (43) der Überwachungskameraeinheit (17) die komprimierten Videosignale überträgt.

8. Kamerasteuerung nach einem der Ansprüche 2 bis 7,
**dadurch gekennzeichnet,**
daß die Sende- und Empfangseinheit (26) der Steuereinheit (11) die von der Steuereinheit (42) der Überwachungskameraeinheit (17) komprimierten Videosignale der Kameraeinheit (41) der Überwachungskameraeinheit (17) empfängt und die Recheneinheit (22) der Steuereinheit (11) die komprimierten Videosignale entkomprimiert.

9. Kamerasteuerung nach einem der Ansprüche 2 bis 8,
**dadurch gekennzeichnet,**
daß die Recheneinheit (22) der Steuereinheit (11) die Relativdaten zur Positionssteuerung komprimiert und die Sende- und Empfangseinheit (26) der Steuereinheit (11) diese komprimierten Daten sendet.

10. Kamerasteuerung nach einem der Ansprüche 2 bis 9,
**dadurch gekennzeichnet,**
daß die Sende- und Empfangseinheit (43) der Überwachungskameraeinheit (17) die komprimierten Daten empfängt, die Steuereinheit (42) der Überwachungskameraeinheit (17) diese Relativdaten entkomprimiert und die Relativdaten anhand der aktuellen Einstellungen der Kameraeinheit (41) der Überwachungskameraeinheit (17) und der Positionierungseinheit (44) der Überwachungskameraeinheit (17) in Absolutdaten umrechnet und mit den Absolutdaten die Positionierungseinheit (44) der Überwachungskameraeinheit (17) die Kameraeinheit (41) der Überwachungskameraeinheit (17) ansteuert.

11. Kamerasteuerung nach einem der Ansprüche 7 oder 8,
**dadurch gekennzeichnet,**
daß die Steuereinheit (42) der Überwachungskameraeinheit (17) und die Recheneinheit (22) der Steuereinheit (11) die Komprimierung und Entkomprimierung der Videosignale nach dem MPEG Standard durchführen.

12. Kamerasteuerung nach einem der Ansprüche 2 bis 11,
**dadurch gekennzeichnet,**
daß die Recheneinheit (22) der Steuereinheit (11) die Markierung (39) mit einem im Anzeigebereich (31) der Anzeigeeinheit (21) der Steuereinheit (11) dargestellten Objekt verknüpft, das von der Markierung (39) markiert wird,
daß die Recheneinheit (22) der Steuereinheit (11) das Objekt analysiert und die Markierung (39) dem Objekt nachführt, sobald das Objekt seine Position verändert, daß die Recheneinheit (22) der Steuereinheit (11) die Überwachungskameraeinheit 17 mit Relativdaten der Veränderung des Abstandes der Markierungen (38) und (39) ansteuert und die Steuereinheit (42) der Überwachungskameraeinheit 17 die Kameraeinheit (41) der Überwachungskameraeinheit 17 und die Positionierungseinheit (44) der Überwachungskameraeinheit 17 ansteuert, daß die Überwachungskameraeinheit 17 dem Objekt nachgeführt wird.

13. Kamerasteuerung nach einem der Ansprüche 2 bis 12,
**dadurch gekennzeichnet,**
daß die Eingabeeinheiten (23, 24, 25) durch Trackballs, Computermäuse, Tastaturen, Grafiktabletts realisiert sind.

14. Kamerasteuerung nach Anspruch 2,
**dadurch gekennzeichnet,**
daß die Recheneinheit (22) die relativen Abstandsdaten in Bezug zur Breite und Höhe des Anzeigebereichs (31) der Anzeigeeinheit (21) ermittelt.

15. Kamerasteuerung nach einem der Ansprüche 3 bis 6,
**dadurch gekennzeichnet,**
daß die Recheneinheit (22) eine Aktivierung und Verschiebung einer der Markierungen (35, 36, 37a, 37b) auf der zugehörigen Bildlaufleisten (32, 33, 34a, 34b) erfaßt und daß die Recheneinheit (22) diese Verschiebung der Markierungen relativ zur vorherigen Position der Markierung auf der zugehörigen Bildlaufleiste erfaßt und die Relativdaten der Verschiebung, bezogen auf die Endstellungen, errechnet und an die Steuereinheit (42) der Überwachungskameraeinheit (17) überträgt.
